# FASCICULE DE BREVET EUROPEEN

(11) **EP 0 679 724 B1**
(45) Date de publication et mention de la délivrance du brevet: **06.02.2002**
(21) Numéro de dépôt: 95400978.3
(22) Date de dépôt: 28.04.1995
(51) Int. Cl.: C21D 9/00, C22C 38/32, F16B 31/06

(54) **Organe de fixation fileté en acier allié à haute résistance à la fatique et procédé de fabrication d'un tel organe fileté**
Befestigungselement mit Gewinde aus legiertem Stahl mit hoher Ermüdungsbeständigkeit und dessen Herstellungsverfahren
Threaded fixing device made of alloy steel with high fatigue resistance and process for manufacturing the same

(30) Priorité: 29.04.1994 FR 9405243
(43) Date de publication de la demande: 02.11.1995
(73) Titulaire: Régie Autonome des Transports Parisiens RATP, 75006 Paris (FR)
(72) Inventeur: Libouban, Gérard, F-75018 Paris (FR)
(74) Mandataire: Moncheny, Michel

(56) Documents cités:
- EP-A- 0 155 029
- EP-A- 0 550 294
- FR-A- 2 204 694
- US-A- 4 537 644
- DATABASE WPI Week 8334, Derwent Publications Ltd., London, GB; AN 83-743519 & JP-A-58 117 856 (DAIDO TOKUSHUKO) 13 Juillet 1983
- STAHL UND EISEN., vol.112, no.2, 17 Février 1992, DUSSELDORF DE pages 95 - 101 S.J. ENGINEER ET AL 'Stähle mit 1% Chrom und Bor für hochfeste Schrauben'

## Description

L'invention concerne les organes de fixation filetés en acier allié destinés à être soumis à des sollicitations dynamiques élevées et devant pour cette raison présenter une haute résistance à la fatigue, par exemple les vis, boulons et analogues, pour attaches élastiques directes ou indirectes de rails de chemins de fer ou toute autre application utilisant ce type d'organe de fixation, ainsi que leur procédé de fabrication.

En effet, il s'est révélé nécessaire de réaliser dans la section des boulons, une structure métallique et une répartition des tensions mécaniques leur permettant de subir des amplitudes dynamiques élevées, dans une large gamme dimensionnelle.

A cette fin, un certain nombre de solutions ont pu être envisagées, et notamment de réaliser des boulons en acier à partir d'une ébauche forgée à chaud dont la zone à fileter est calibrée par rétreint à froid, munis d'un filetage roulé à froid ; on a également pu envisager, en variante, un boulon comme précédemment décrit mais qui a subi un recuit de restauration avant le roulage des filets ; une autre solution était de réaliser des boulons comme dans le premier cas mais en acier allié, avec trempe et revenu après roulage des filets.

Néanmoins, ces solutions n'ont en pratique abouti qu'à des résultats imparfaits, et il s'est révélé nécessaire de les perfectionner.

A cet effet, l'invention concerne un organe de fixation fileté en acier allié, caractérisé en ce qu'il est constitué en acier au bore faiblement allié de nuance 38CB1, dont la teneur en carbone est de 0,34 à 0,38%, et dont les teneurs en soufre et en phosphore sont au maximum de 0,020% chacune.

Grâce au choix judicieux de la nuance d'acier, il est possible de faire subir à la pièce un traitement thermique particulier et d'adapter la procédure de filetage à ce traitement en vue d'obtenir le résultat recherché.

L'invention concerne également un procédé de fabrication d'un organe de fixation tel que mentionné ci-dessus, caractérisé en ce qu'on sélectionne un acier faiblement allié au bore présentant une teneur en carbone de 0,34 à 0,38%, et du soufre et du phosphore avec des teneurs maximales de 0,020% chacune, on forge à chaud dans cet acier une ébauche de l'organe de fixation, on chauffe la pièce obtenue à 870°C environ pendant une trentaine de minutes, et on trempe la pièce.

D'autres caractéristiques et avantages de l'invention ressortiront de la description qui va suivre d'une forme et d'un mode de réalisation de l'invention donnés à titre d'exemples non limitatifs.

Selon l'invention, les organes filetés destinés à la fixation notamment d'attaches élastiques de rails de chemin de fer interurbain ou métropolitain, tels que des vis, boulons et analogues, sont réalisés en acier au bore faiblement allié de nuance 38CB1.

Cependant, tandis que les teneurs limites habituelles de cette nuance d'acier sont :
- carbone : 0,32 à 0,42%,
- soufre : au plus 0,040%,
- phosphore : au plus 0,040%,
   on choisit dans le cas présent un acier au bore dont les teneurs ont pour limites les valeurs suivantes :
- carbone : 0,34 à 0,38%,
- soufre : au plus 0,020%,
- phosphore : au plus 0,020%.

A partir de cet acier, qu'il soit issu d'un "rond" calibré ou non, on réalise par forgeage à chaud, une ébauche de la pièce, par exemple du boulon muni de sa tête, puis, si l'on n'est pas parti d'un rond calibré, on effectue un rétreint à froid de la ou des zone(s) à fileter, dans les deux cas on chauffe la pièce à 870°C environ pendant une trentaine de minutes (chauffage "d'austénisation"), on trempe la pièce à l'huile, on effectue un revenu "de renforcement" en chauffant la pièce au voisinage de 625°C (de préférence 625°C ±5°C) et en maintenant la pièce dans ce domaine de températures pendant environ 1h45mn, et on refroidit la pièce à l'eau à température ambiante.

Plus précisément, le revenu dit "de renforcement" consiste en ce que l'on effectue le revenu à une température supérieure à celle du revenu habituel pour cette nuance d'acier, avec un écart sur la température préconisée, de seulement ±5°C, et en ce que l'on maintient le traitement pendant un temps très supérieur à la durée habituelle. En effet, le revenu habituel pour la nuance 38CB1 consiste en un chauffage entre 450°C et 550°C, à ±50°C, pendant environ une heure.

Après quoi, on façonne les filets par roulage à froid. Il est important que la pièce ne subisse pas de traitement thermique même à basse température, postérieurement à l'opération de roulage des filets.

Des essais comparatifs ont été effectués sur des boulons de géométrie identique réalisés en différentes nuances d'acier, sans traitement thermique et ayant subi divers traitements thermiques, et cela pour deux géométries différentes. Le boulon de type 1 est un boulon dit "à came" de 18 mm de diamètre présentant une longueur sous tête de 180 mm et une longueur filetée de 45 mm ; le boulon de type 2, de 22 mm de diamètre présente une longueur totale de 184 mm, une extrémité filetée de longueur 40 mm, et à l'opposé un filetage spécial de tirefond au pas de 12,5 mm avec un filet haut de 3,25 mm présentant un profil en triangle tronqué au sommet et dissymétrique d'environ 4,5 mm de base, avec un diamètre extérieur total de 23 mm.

Les valeurs trouvées sont consignées dans les tableaux ci-après :

| Boulon de type 1 à came φ18 | | |
|---|---|---|
| numéro d'échantillon | nuance d'acier | amplitude dynamique de résistance à la fatigue en daN/mm² |
| 1 | AF60C40 | ±5 |
| 2 | 42CD4 | ±5 |
| 3 | 30nC11 | ±5 |
| 4 | AF60C40 | ±7 |
| 5 | 38CB1 de l'invention | ±12 |

| Boulon-tirefond de type 2 de 23 x 184 | | |
|---|---|---|
| numéro d'échantillon | nuance d'acier | amplitude dynamique de résistance à la fatigue en daN/mm² |
| 1 | AF50C30 | ±4 |
| 2 | 42CD4 | ±4 |
| 3 | 30NC11 | ±4 |
| 4 | AF50C30 | ±5 |
| 5 | 38CB1 de l'invention | ±9 |

Les échantillons No.1 n'avaient pas subi de traitement thermique.

Les échantillons No.2 et No.3 avaient subi une trempe et un revenu classique après roulage des filets.

Les échantillons No.4 avaient subi un recuit avant le roulage des filets.

Les échantillons No.5 étaient des boulons selon l'invention.

L'augmentation de la résistance à la fatigue dans le cas des organes selon l'invention est importante puisque l'amplitude dynamique de résistance à la fatigue est presque doublée, et il apparaît que l'ensemble des caractéristiques décrites ci-dessus confère à l'organe fileté un état structural métallique et une répartition des tensions mécaniques permettant d'obtenir une haute limite d'endurance des boulons lors des sollicitations dynamiques de traction et de flexion.

## Revendications

1. Organe de fixation fileté en acier allié, **caractérisé en ce qu'**il est constitué en acier au bore faiblement allié de nuance 38CB1, dont la teneur en carbone est de 0,34 à 0,38%, et dont les teneurs en soufre et en phosphore sont au maximum de 0,020% chacune.

2. Organe de fixation selon la revendication 1, **caractérisé en ce qu'**il est en acier calibré.

3. Organe de fixation selon la revendication 1, **caractérisé en ce qu'**il est en acier forgé à chaud et comporte une zone filetée calibrée rétreinte à froid.

4. Organe de fixation selon la revendication 1, **caractérisé en ce qu'**il est en acier comportant de l'austénite, trempé à l'huile.

5. Organe de fixation selon la revendication 4, **caractérisé en ce qu'**il est en acier revenu.

6. Organe de fixation selon la revendication 1, **caractérisé en ce qu'**il comporte une zone filetée roulée à froid.

7. Procédé de fabrication d'un organe de fixation selon la revendication 1, **caractérisé en ce qu'**on sélectionne un acier faiblement allié au bore présentant une teneur en carbone de 0,34 à 0,38%, et du soufre et du phosphore avec des teneurs maximales de 0,020% chacune, on forge à chaud dans cet acier une ébauche de l'organe de fixation, on chauffe la pièce obtenue à 870°C environ pendant une trentaine de minutes, et on trempe la pièce.

8. Procédé de fabrication selon la revendication 7, **caractérisé en ce qu'**après que l'on ait forgé l'ébauche et avant que l'on chauffe la pièce à 870°C environ, on rétreint à froid pour la calibrer, au moins une zone à fileter.

9. Procédé selon la revendication 7, **caractérisé en ce que**, après avoir trempé la pièce, on la chauffe à nouveau à environ 625°C, on maintient cette température pendant environ 1h45mm, et on refroidit la pièce.

10. Procédé selon la revendication 9, **caractérisé en ce que** l'on chauffe la pièce à une température de 620 à 630°C, et après avoir maintenu sa température dans cette gamme pendant environ 1h45mm, on refroidit la pièce à l'eau à température ambiante.

11. Procédé selon l'une des revendications 7 à 10, **caractérisé en ce que**, après tous les traitements thermiques, on effectue un roulage à froid de la zone (ou des zones) à fileter pour y réaliser un filetage.

12. Procédé selon l'une des revendications 7 à 10, **caractérisé en ce que**, après tous les traitements thermiques, on effectue un roulage à froid de la zone (ou des zones) à fileter pour y réaliser un filetage, et on s'abstient de tout traitement thermique ultérieur.

## Patentansprüche

1. Befestigungselement aus legiertem Stahl, das mit einem Gewinde versehen ist, **dadurch gekennzeichnet, dass** es aus niedriglegiertem Borstahl der Sorte 38CB1 besteht, dessen Kohlenstoffgehalt 0,34 bis 0,38 % und dessen Schwefel- und Phosphorgehalt jeweils höchsten 0,020 % beträgt,

2. Befestigungselement nach Anspruch 1, **dadurch gekennzeichnet, dass** es aus Blankstahl besteht.

3. Befestigungselement nach Anspruch 1, **dadurch gekennzeichnet, dass** es aus warmgeschmiedetem Stahl besteht und einen blanken Gewindebereich umfasst, dessen Durchmesser zuvor bei Raumtemperatur reduziert worden ist.

4. Befestigungselement nach Anspruch 1, **dadurch gekennzeichnet, dass** es aus ölgehärtetem austenitischem Stahl besteht.

5. Befestigungselement nach Anspruch 4, **dadurch gekennzeichnet, dass** es aus Vergütungsstahl besteht.

6. Befestigungselement nach Anspruch 1, **dadurch gekennzeichnet, dass** es einen kaltgewalzten Gewindebereich umfasst.

7. Verfahren zur Herstellung eines Befestigungselements nach Anspruch 1, **dadurch gekennzeichnet, dass** ein niedriglegierter Borstahl, dessen Kohlenstoffgehalt 0,34 bis 0,38 % und dessen Schwefel- und Phosphorgehalt jeweils höchsten 0,020 % beträgt, ausgewählt, dieser Stahl zu einem Rohteil für das Befestigungselement warmgeschmiedet und das erhaltene Werkstück etwa dreißig Minuten lang auf etwa 870°C erhitzt und anschließend gehärtet wird.

8. Herstellungsverfahren nach Anspruch 7, **dadurch gekennzeichnet, dass** nach Schmieden des Rohteils und vor Erhitzen des Werkstücks auf etwa 870°C der Durchmesser mindestens eines mit Gewinde zu versehenden Bereichs durch Kaltumformung reduziert wird.

9. Verfahren nach Anspruch 7, **dadurch gekennzeichnet, dass** das Werkstück nach dem Härten erneut auf etwa 625°C erhitzt, bei dieser Temperatur etwa 1 h 45 min lang gehalten und danach abgekühlt wird.

10. Verfahren nach Anspruch 9, **dadurch gekennzeichnet, dass** das Werkstück auf eine Temperatur von 620 bis 630°C erhitzt und, nachdem seine Temperatur etwa 1 h 45 min lang in diesem Bereich gehalten worden ist, mit Wasser auf Umgebungstemperatur abgekühlt wird.

11. Verfahren nach einem der Ansprüche 7 bis 10, **dadurch gekennzeichnet, dass** zur Herstellung eines Gewindes nach diesen wärmebehandlungen ein Kaltwalzen des/der mit Gewinde zu versehenden Bereichs/Bereiche durchgeführt wird.

12. Verfahren nach einem der Ansprüche 7 bis 10, **dadurch gekennzeichnet, dass** zur Herstellung eines Gewindes nach diesen Wärmebehandlungen ein Kaltwalzen des/der mit Gewinde zu versehenden Bereichs/Bereiche durchgeführt wird und eine nachfolgende Wärmebehandlung entfällt.

## Claims

1. Threaded fixing device made of alloy steel, **characterised in that** it consists of low-alloy boron steel of grade 38CB1, the carbon content of which is from 0.34 to 0.38%, and the sulphur and phosphorus contents of which are at most 0.020% each.

2. Fixing device according to claim 1, **characterised in that** it is made of gauged steel.

3. Fixing device according to claim 1, **characterised in that** it is made of hot-forged steel and comprises a cold-swaged gauged threaded zone.

4. Fixing device according to claim 1, **characterised in that** it is made of oil-hardened steel containing austenite.

5. Fixing device according to claim 4, **characterised in that** it is made of tempered steel.

6. Fixing device according to claim 1, **characterised in that** it comprises a cold-rolled threaded zone.

7. Method of manufacturing a fixing device according to claim 1, **characterised in that** a low-alloy boron steel having a carbon content of 0.34 to 0.38% and containing sulphur and phosphorus in maximum amounts of 0.020% each is selected, a blank of the fixing device is hot-forged from this steel, the part obtained is heated to about 870°C for about thirty minutes and then quenched.

8. Manufacturing method according to claim 7, **characterised in that** after the blank has been forged and before the part has been heated to about 870°C, at least one zone which is to be threaded is cold-swaged in order to gauge it.

9. Method according to claim 7, **characterised in that**, after the part has been quenched, it is heated again to about 625°C, kept at this temperature for. about 1h 45 min, and the part is cooled.

10. Method according to claim 9, **characterised in that** the part is heated to a temperature of 620 to 630°C, and after the temperature has been kept in this range for about 1h 45 min, the part is cooled to ambient temperature with water.

11. Method according to one of claims 7 to 10, **characterised in that**, after all the heat treatments, the zone (or zones) to be threaded is (are) cold-rolled to produce a thread.

12. Method according to one of claims 7 to 10, **characterised in that**, after all the heat treatments, the zone (or zones) to be threaded is (are) cold-rolled to produce a thread, and no subsequent heat treatment is carried out.
